# EUROPEAN PATENT SPECIFICATION

(11) **EP 1 171 001 B1**
(45) Date of publication and mention of the grant of the patent: **14.12.2005**
(21) Application number: 00920915.6
(22) Date of filing: 19.04.2000
(51) Int. Cl.: A23G 1/00, A23G 3/00, A23G 3/22

(54) **CONFECTIONERY COATINGS**
KONFEKTÜBERZUGMITTEL
COUVERTURES DE CONFISERIE

(30) Priority: 22.04.1999 GB 9909276; 28.07.1999 GB 9917657; 27.08.1999 GB 9920303; 22.10.1999 GB 9924925
(43) Date of publication of application: 16.01.2002
(60) Divisional application: 03077806.2
(73) Proprietor: APV Systems Limited, London SW1P 1BX (GB)
(72) Inventor: BROWN, Peter Arthur, Peterborough PE4 6LH (GB); PRANGE, Anthony John, Peterborough PE3 9QE (GB); COULTHARD, Roger David, Peterborough PE8 6XB (GB)
(74) Representative: Lomas, Geoffrey Michael
(86) International application number: PCT/GB2000/001555
(87) International publication number: WO 2000/064269

(56) References cited:
- EP-A- 0 322 952
- WO-A-95/15699
- DE-A- 2 653 018
- GB-A- 1 297 579
- US-A- 2 883 286
- US-A- 3 958 018
- US-A- 4 032 667
- US-A- 4 661 366

## Description

This invention relates to the production of confectionery coatings and particularly to the production of coatings containing gaseous bubbles, such as chocolate coatings containing bubbles of air. The bubbles are generally microscopic, that is they are not readily detected by the unaided human eye.

Methods for producing aerated chocolate bar fillings are well known, and such chocolate bars are popular. There appears, however, to be no satisfactory production process for making and applying an aerated confectionery coating having a substantially unblemished outer surface, that is a surface that is not interrupted by broken bubbles. Additionally the presence of bubbles should not readily be detected within the coating mass.

Specification no. GB 1297579 proposed a special chocolate composition for use in an aerated chocolate coating. It was proposed to incorporate up to 5% by weight of one or more polyglycerol ester emulsifiers in a chocolate composition to assist in foaming the hot chocolate with air, and to stabilise the foamed chocolate during subsequent handling of the liquid mass. Only laboratory tests are described; no production equipment is described.

Chocolate coating processes, such as enrobing processes, are generally aimed at avoiding and removing any air bubbles.

The present invention is aimed primarily at providing a coating method and apparatus that is capable of being used to provide aerated coatings of substantially conventional chocolate compositions, but the invention can in many cases be used to produce coatings of other confectionery materials containing gaseous bubbles.

The coating processes of the invention may be used to coat biscuits, confectionery items such as soft centres, bar combinations, frozen confectionery items, cakes and setting yoghurts etc.

The invention is particularly applicable to enrobing processes in which the product to be coated passes through a curtain of coating material, but it should be appreciated that the coating head may be employed to coat the product in other ways, such as by spraying or by feeding a bath of coating material in which the product is dipped, the excess coating material on the product being removed by the usual methods.

Where the context admits, the term 'aerated' will be used herein to cover bubbles containing gases other than air. For example, bubbles of nitrogen may be used.

According to a first aspect of the invention there is provided apparatus for producing an aerated chocolate coating on a product, the apparatus comprising a coating head and a supply conduit to the coating head from an aeration means, characterised by means for maintaining the supply at a substantial super-atmospheric pressure up to the vicinity of the coating head, a reservoir for collecting excess chocolate delivered by the coating head, a recirculation means for returning excess chocolate directly from the reservoir to the aeration means, without passing through a de-aerator, in order to provide an amplification of the amount of aeration present in the chocolate when applied to the product, and a fresh chocolate supply for supplementing the excess chocolate with fresh chocolate from a temperer.

According to a second aspect of the invention there is provided a process for producing an aerated chocolate coating on products comprising supplying liquid chocolate to a coating head maintaining the chocolate under substantial super-atmospheric pressure up to the vicinity of the coating head, forming, by gas injection in an aerator, gaseous bubbles in the pressurised chocolate prior to the chocolate reaching the coating head, excess liquid chocolate delivered by the coating head being collected in a reservoir and being recirculated into said supply, upstream of the aerator, and without being substantially de-aerated, to provide an amplification of the amount of aeration present in the chocolate when applied to the product, and supplementing the excess liquid chocolate by fresh chocolate fed from a temperer.

The invention will now be further described, by way of example only, with reference to the accompanying drawings, in which:
**Figure 1** is a flow diagram of a typical prior art chocolate enrobing production facility,
**Figure 2A** is a schematic flow diagram of a chocolate coating production facility in accordance with the invention for coating items with an aerated chocolate coating,
**Figure 2B** is a partial flow diagram of a coating facility in accordance with the invention and which is a modification of the facility of Figure 2A to accommodate a substantially conventional coating head,
**Figure 3** is a perspective view of a coating head manifold in accordance with the invention and suitable for producing a curtain of aerated chocolate in the facility of Figure 2A,
**Figure 4** is a vertical cross-section of the manifold of Figure 3,
**Figure 5** is a cross-section similar to Figure 3 but of a manifold coating head incorporating an outlet roller,
**Figure 6** is a cross-section similar to Figure 4 but of a manifold assembly in which the outlet is defined in part by an inflatable tube,
**Figure 7** is an enlarged cross-sectional view of the tube of flattened form, shown in an unpressurised condition, employed in the assembly of Figure 6,
**Figure 8** is a schematic perspective view of an enrobing assembly in accordance with the invention for use with aerated chocolate and suitable for coating both the top and bottom of items carried by the foraminous conveyor,
**Figure 9** is a vertical cross-section of a coating head in the form of a manifold assembly for producing a ribbon of aerated chocolate for application to the underside of articles carried by the conveyor,
**Figure 10** is a side view, in section, of a flow restrictor suitable for positioning in the vicinity of an open-to-atmosphere coating head, and
**Figure 11** is a view in perspective of the deformable duct incorporated in the restrictor of Figure 10.

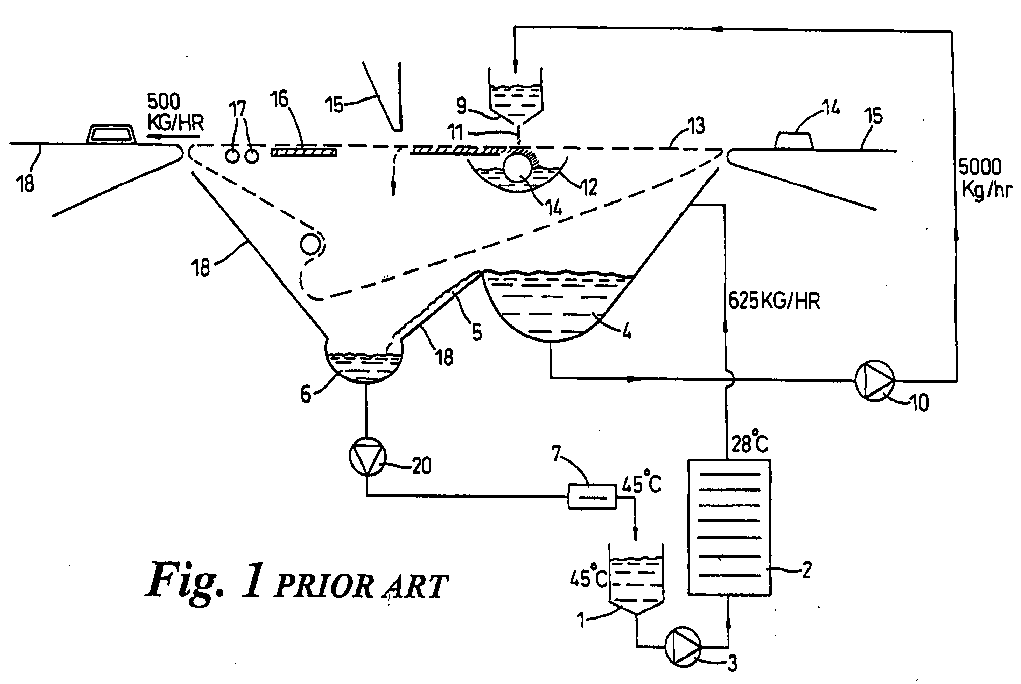

Referring firstly to Figure 1, this shows a typical prior art chocolate enrobing facility, and it will be helpful to consider this before discussing the subject invention. In Figure 1 a holding tank 1 is provided for freshly prepared chocolate melt (and also to contain some recirculated chocolate) which is then fed by a pump 3 through a tempering unit 2 to cool it and initiate controlled crystallisation, as is well known.

The tempered chocolate is fed, at a rate of typically 625 kg/hr to a main reservoir 4 of chocolate provided with an overflow 5 to a return reservoir 6 from which excess chocolate is returned by way of a heater 7 to holding tank 1.

The main reservoir 4 is the supply of chocolate for the coating head 9 to which the chocolate is pumped by pump 10 at a relatively high flow rate of about 5000 kg/hr, that is significantly greater than the rate (about 500 kg/hr) that fresh chocolate is being provided in holding tank 1.

A curtain 11 of chocolate flows down towards a trough 12 and a foraminous, wire conveyor 13 carries items to be coated, such as biscuits 14 from an infeed conveyor 15, through the curtain 11 whereby a chocolate coating is deposited on the top and sides of the biscuits, and surplus chocolate runs into the trough 12. Various devices are known for picking up chocolate from trough 12 to coat the underside of the items on conveyor 13, and a typical roller 14 applicator is shown.

Excess chocolate is removed from the coated biscuits by means of one or more of the following devices: (i) blower 15; (ii) shaker 16 and (iii) licking rolls 17.

The coated biscuits then pass to a discharge conveyor 18. The excess chocolate removed by devices 15, 16 and 17 will be directed by inclined walls 18 into the return reservoir 6, and typically a quantity of 125 kg/hr is returned by pump 20 to the holding tank 1.

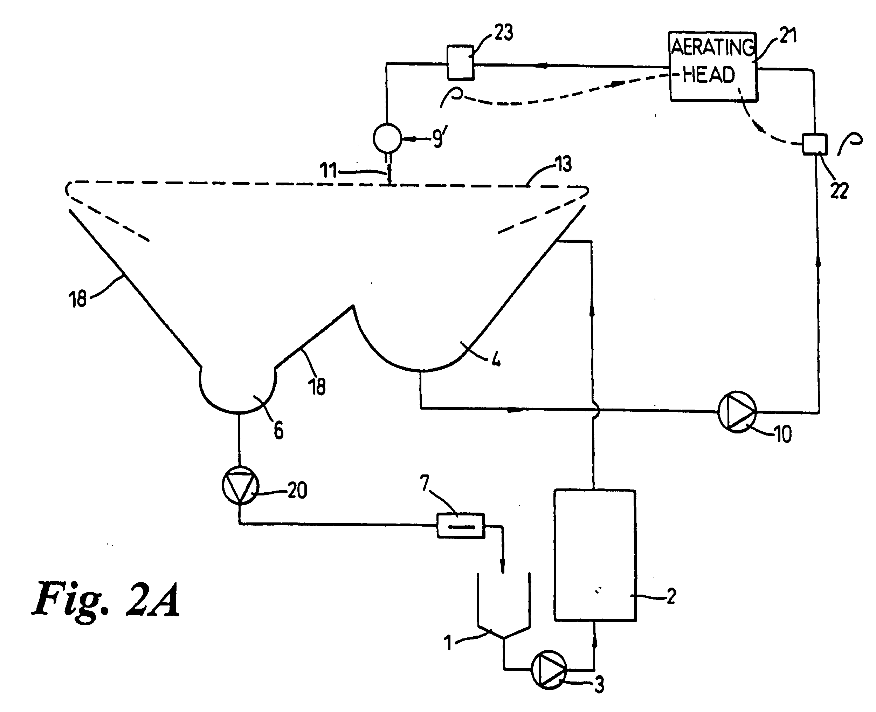

Figure 2A shows a modified chocolate enrobing facility in accordance with the invention, in so far as Figure 2A shows the changes that are required to the facility of Figure 1 in order to produce an aerated chocolate coating on the upper surface of items carried by the foraminous conveyor. System parts correspond to those of the facility of Figure 1 have been corresponding reference numerals in Figure 2A.

In Figure 2A an aerating head 21 has been inserted into the supply to the coating head 9', pump 10 has been up-rated to pump chocolate at a similar rate of about 5000 kg/hr but against a substantially increased back pressure of typically 4 atmospheres above atmospheric pressure produced by the modified coating head 9'.

Aerating head 21 can be of the type as sold by Tanis Food Technology B.V., Chroomstraat, 8,3211 AS, Lelystad, The Netherlands under designation No TFT Aerator.

The rate of flow of air fed to the aerating head is controlled in response to measurements of chocolate density as provided by density measurement devices 22, 23 which monitor the chocolate density in the pressurised supply to the coating head 9'.

The aim of controlling the aerating head 21 is to produce a substantially constant density of aerated chocolate being supplied to coating head 9'.

The main control is provided by device 23 in the form of a negative feedback control function to aerating head 21.

The additional measurement device 22 which is upstream of the aerating head 21 will respond to changes in the quantity of air in the chocolate being returned from main reservoir 4 and cause some adjustment of the quantity of air being injected into the chocolate flowing through the aerating head 21.

The devices 22 and 23 are typically of the vibrating tube type, and for example suitable units are those available from PAAR Scientific Limited, 594 Kingston Road, Raynes Park, London SW20 8DN under designation DPR Density meter.

It will be appreciated however that other devices giving an indication of density may equally be used such as a colour meter (colour lightening with increasing aeration) or a viscometer (viscosity increasing with increasing aeration).

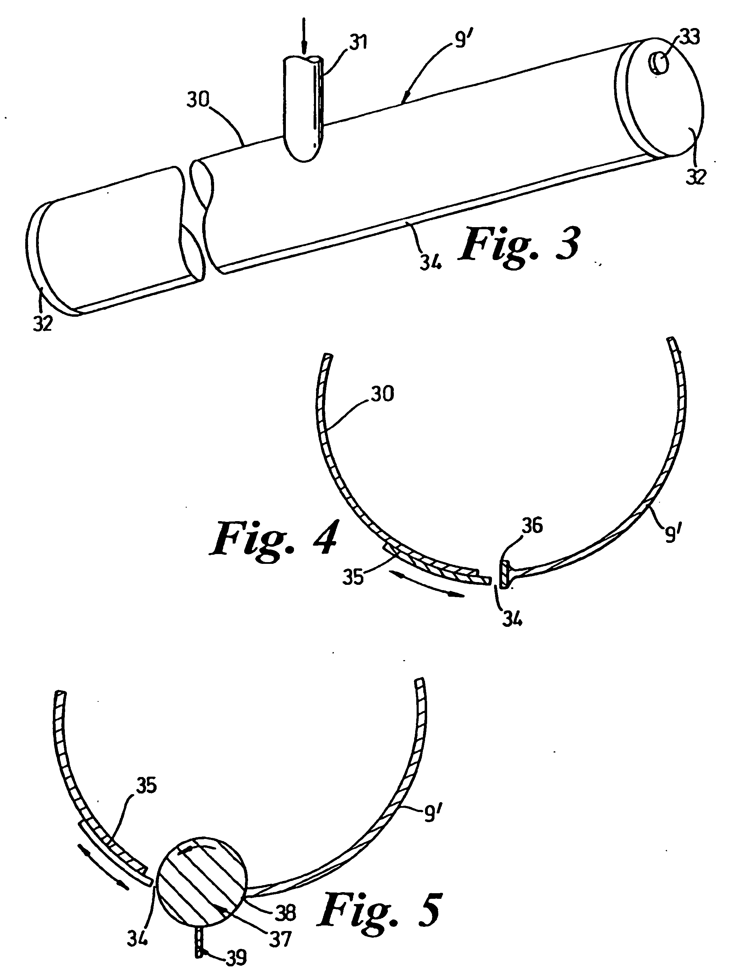

The measures taken in manifold assembly 9' to create a back pressure at the aerating head 21 are described hereafter with reference to Figures 3 and 4.

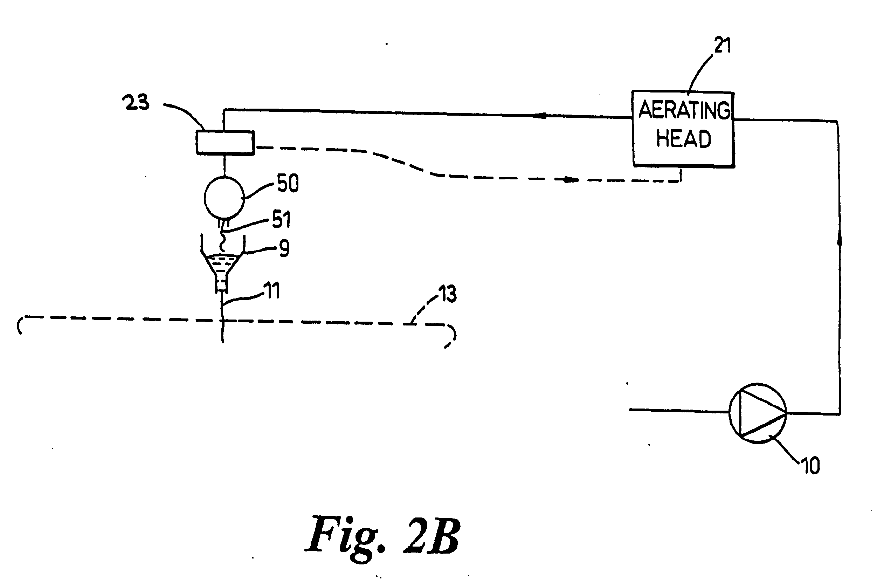

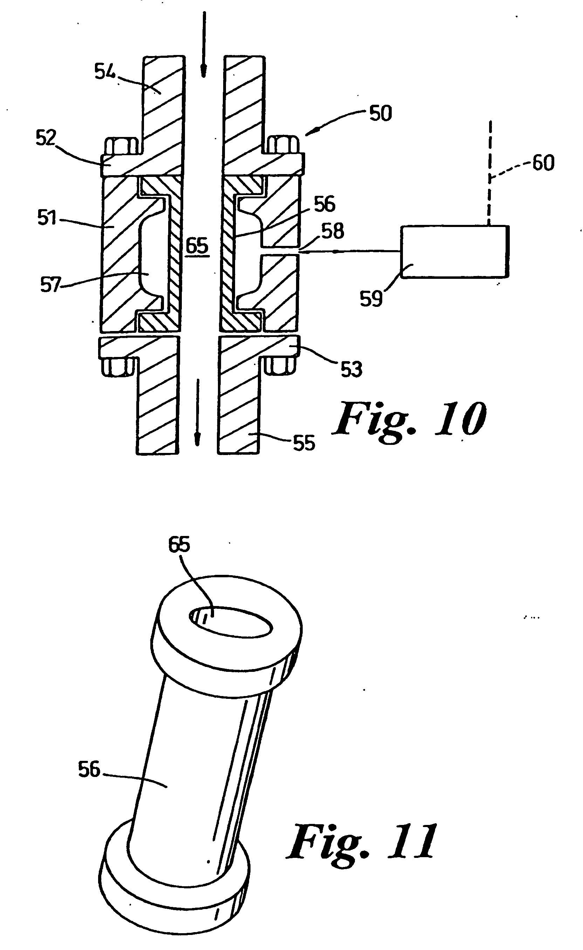

Figure 2B shows an arrangement suitable for use with a conventional hopper-type coating head 9, the hopper of which is open to the atmosphere. In order to maintain pressure in the supply of coating material up to the vicinity of the coating head 9, a flow restrictor 50 is provided just prior to the coating head 9, the outlet 51 of the flow restrictor 50 discharging directly into the hopper of the coating head 9 in order to minimise the loss of bubbles which might occur if a longer flowpath were to be provided from the flow restrictor means 50. A suitable flow restrictor is described hereafter with reference to Figures 10 and 11.

The arrangement shown in figure 2A produces an amplification of the amount of aeration applied by the aeration head to the amount of aeration which is present in the chocolate when applied to the product. This amplification is approximately in the ratio of the pump flow rate through the aerator head to the pump flow rate from the tempering unit and is due largely to the circulation of the chocolate through the coating unit. This amplification could be of particular advantage in applications requiring high levels of aeration (especially in the case of certain 'whipped chocolate' products).

Figure 3 shows a manifold 9' in the form of a stainless steel tube 30 provided with an inlet 31, removable end caps 32 being secured on the end of the tube 30, each end cap being provided with a respective pressure relief valve 33, the end caps being capable of withstanding a pressure differential of 8 Bar. The use of pressure relief valves 33 enables a positive displacement pump 10 to be employed. Valves 33 can be set typically at 4 Bar excess internal pressure.

An outlet slot 34 extends for the full length of the manifold and, as shown in Figure 4, the width of the outlet slot is determined by an elongate flow adjuster plate 35 of arcuate transverse cross-section, suitable releasable securing means, not shown, being provided to retain the plate 35 in sealing engagement with the outer surface of tube 30.

The slot 34 is thus defined between the free edge of plate 35 and a radial anvil plate 36 which assists in creating a curtain of aerated chocolate which hangs down from anvil plate 36.

In an alternative construction of manifold, not illustrated, the stainless steel tube 30 is provided in its underside with a series of holes, instead of a slot, the holes being of a suitable size and spacing to produce a curtain of chocolate.

Figure 5 shows a further alternative construction of manifold assembly in which slot 34 is defined between the free edge of a similar adjuster plate 35 and a driven roller 37 which is rotated in the sense to carry aerated chocolate through the slot 34. Roller 37 is in rubbing contact with the tube margin at 38.

A fixed scraper 39 is positioned directly below roller 37 to remove the chocolate from the roller thereby to create a curtain of aerated chocolate.

The arrangement of Figure 5 utilises a manifold pressure of approximately 4 Bar above atmospheric pressure.

Rollover of chocolate is minimised by the arrangements of Figures 3 to 5, thereby helping to preserve the integrity of the bubbles of air in the chocolate.

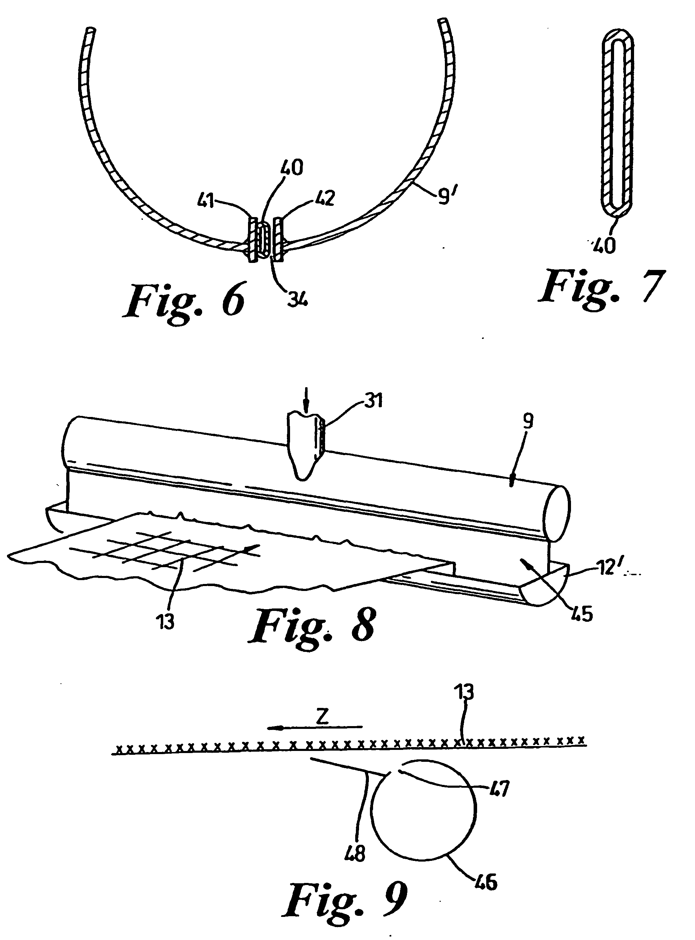

In Figure 6 an inflatable tube 40, of flattened form shown in Figure 7, defines one side of the outlet slot 34, the tube being bonded to one plate 41 of a pair of anvil plates 41, 42. The interior of the tube is subjected to a pressure for controlling the resistance to chocolate flowing through slot 34. The tube 40 can act as an automatic pressure relief valve since if the pressure inside the manifold tube 9' tends to rise then the tube 40 will become more flattened to allow slot width 34 to increase, thereby tending to relieve the manifold pressure.

Figure 8 shows a coating head assembly for producing an aerated coating over all surfaces of the items carried by foraminous conveyor 13. The coating head assembly comprises an elongate manifold 9' which can be of the form shown in the previous Figures, and produces a vertical curtain 45 of aerated chocolate of a length greater than the width of conveyor 13, a trough 12' of length substantially equal to that of manifold 9' being positioned beneath the conveyor path in order to collect the surplus curtain material, and then to provide a supply of aerated chocolate for coating the underside of the conveyed items, a suitable roller applicator, not shown, being located in trough 12'.

The excess length of the curtain relative to the width of the conveyor provides sufficient chocolate to the trough 45 to coat the underside of the items to the desired thickness of bottom coating.

When the manifold ends are provided with pressure relief valves, then the trough 45 should be of sufficient length to catch any surplus material from the relief valves, or a separate collection means should be provided to return the surplus material to return reservoir 6, Figure 2A.

Figure 9 shows a coating head in the form of a tubular manifold 46 positioned beneath a foraminous, wire conveyor 13, the manifold being provided in about the 10 o'clock position with an outlet slot 47 through which a ribbon of chocolate is extruded, the ribbon being guided upwardly and generally in the direction Z of conveyor travel by an inclined elongate guide plate 48, plate 48 extending close to the conveyor 13, whereby the chocolate ribbon is applied to the underside of items carried by the conveyor 13. This arrangement is suitable for providing an aerated chocolate coating on the underside of items to produce a half-coated' product.

Figures 10 and 11 together illustrate back-pressure means in the form of a flow restrictor 50 suitable for positioning in the vicinity of the coating head, just prior to the inlet thereof, as in Figure 2B.

The flow restrictor 50 comprises a tubular housing 51 clamped between flanged ends 52, 53 of a product inlet 54 and a product outlet 55. The housing 51 locates a deformable (rubber) duct 56 and defines a control chamber 57 surrounding the middle of the duct. A control passageway 58 connects the chamber 57 with a controllable source 59 of pressurised air. A signal line 60 is used to adjust air pressure within the chamber 57.

The duct 56 has a bore 65 of oval cross-section. In operation, an increase in control air pressure within the chamber 57 will tend to flatten the oval-section bore 65 of the deformable duct 56 so as to restrict product flow through the restrictor 50. Alternatively, a decrease in control air pressure within the chamber 57 will enlarge the cross-section of the bore 65 thus allowing product flow to increase.

Gas other than air may be used for control purposes. For example, pressurised nitrogen may be used.

The pressurised gas, (for example air or nitrogen) used to control the flow restrictor 50 is preferably the same as that used for aerating purposes and may then be connected to the same supply source of said gas.

## Claims

1. Apparatus for producing an aerated chocolate coating on a product, the apparatus comprising a coating head (9'), and a supply conduit to the coating head from an aeration means (21), **characterised by** means (34, 35; 56) for maintaining the supply at a substantial super-atmospheric pressure up to the vicinity of the coating head, a reservoir (4) for collecting excess chocolate delivered by the coating head, a recirculation means (10) for returning excess chocolate directly from the reservoir to the aeration means, without passing through a de-aerator, in order to provide an amplification of the amount of aeration present in the chocolate when applied to the product, and a fresh chocolate supply (1) for supplementing the excess chocolate with fresh chocolate from a temperer (2).

2. Apparatus as claimed in claim 1 in which the fresh chocolate supply leads into the reservoir (4)

3. Apparatus as claimed in claim 1 or claim 2 in which the aeration means is arranged to subject the liquid chocolate to shearing forces in order to reduce gas bubble size.

4. A process for producing an aerated chocolate coating on products comprising supplying liquid chocolate to a coating head (9'), maintaining the chocolate under substantial super-atmospheric pressure up to the vicinity of the coating head (9'), forming, by gas injection in an aerator, gaseous bubbles in the pressurised chocolate (21) prior to the chocolate reaching the coating head, excess liquid chocolate delivered by the coating head being collected in a reservoir (4) and being recirculated into said supply, upstream of the aerator, and without being substantially de-aerated, to provide an amplification of the amount of aeration present in the chocolate when applied to the product, and supplementing the excess liquid chocolate by fresh chocolate fed from a temperer (2).

5. A process as claimed in claim 4 comprising forming, by gas injection, gaseous bubbles in the pressurised liquid chocolate (21) prior to the liquid chocolate reaching the coating head (9'), the rate of injection of gas into the liquid chocolate being controlled in response to a measure (22, 23) of the density of liquid chocolate in the supply to the coating head (9').

6. A process according to any of claims 4 or 5, wherein injection of gas into the pressurised liquid chocolate is by means of an aerator (21) controllable to take account that fresh coating chocolate being supplied from the liquid chocolate source (4) is not aerated, whereas the recirculated liquid chocolate (6, 1, 3, 2) is generally still at least partially aerated.

7. A process according to any one of claims 4, 5 or 6, wherein a density measurement is made at a position (23) in the pressurised supply that is downstream of the point (21) where aeration takes place.

8. A process according to any one of claims 4 to 7, wherein the aeration device is controlled in response to a measure of the density of the liquid chocolate at a point (22) upstream of where aeration takes place.

9. A process according to any one of claims 4 to 8, wherein after injection of gas the liquid chocolate is subjected to shearing forces in order to reduce gas bubble size.

10. A process according to any one of claims 4 to 9, wherein the pressure of liquid chocolate after aeration is substantially in the range 2-10 atmospheres, above atmospheric pressure.

11. A process according to claim 10, wherein pressure of the liquid chocolate after aeration is in the range 3 to 6 atmospheres above atmospheric pressure.

12. A process according to any one of claims 4 to 11, wherein pressure in the pressurised supply of liquid chocolate is created by a back-pressure means (50) in the form of a flow restrictor positioned in the vicinity of the coating head (9'), just prior to the inlet thereof.

13. A process according to claim 12, wherein the flow restrictor (50) comprises a deformable duct (56) and means (57, 58, 59) for applying an external deforming force to the duct (56) in a controlled manner so as to vary the cross-sectional bore (65) of the duct.

## Patentansprüche

1. Einrichtung zur Herstellung eines belüfteten Schokoladenüberzugs auf einem Produkt, wobei die Einrichtung einen Auftragskopf (9') und eine Zuführungsleitung zu dem Auftragskopf aus einer Belüftungseinrichtung (21) umfasst, **gekennzeichnet durch** Mittel (34, 35; 56) zum Halten der Zuführung auf einem beträchtlichen superatmosphärischen Druck bis in die nahe Umgebung des Auf tragskopfes, einen Behälter (4) zum Sammeln von **durch** den Auftragskopf abgegebenem Schokoladenüberschuss, eine Umwälzeinrichtung (10) zum Zurückführen von Schokoladenüberschuss direkt aus dem Behälter zu der Belüftungseinrichtung, ohne **durch** eine Entlüftungseinrichtung zu gehen, um eine Vermehrung der in der Schokolade vorhandenen Belüftungsmenge vorzusehen, wenn sie auf das Produkt angewendet wird, und eine Frischschokdladenzuführung (1) zum Ergänzen des Schokoladenüberschusses mit frischer Schokolade aus einer Temperiervorrichtung (2).

2. Einrichtung nach Anspruch 1, wobei die Frischschokoladenzuführung in den Behälter (4) führt.

3. Einrichtung nach Anspruch 1 oder 2, wobei die Belüftungseinrichtung so angeordnet ist, dass sie die flüssige Schokolade Scherkräften unterwirft, um die Gasblasengröße zu reduzieren.

4. Verfahren zur Herstellung eines belüfteten Schokoladenüberzugs auf Produkten, das Folgendes umfasst: Zuführen flüssiger Schokolade zu einem Auf tragskopf (9'), Halten der Schokolade unter einem beträchtlichen superatrnosphärischen Druck bis in die nahe Umgebung des Auftragskopfes (9'), Ausbilden von Gasblasen in der druckbeaufschlagten Schokolade (21) durch Gaseinspritzung in einer Belüftungseinrichtung, bevor die Schokolade den Auftragskopf erreicht, wobei ein Überschuss der durch den Auftragskopf abgegebenen flüssigen Schokolade in einem Behälter (4) gesammelt und stromaufwärts der Belüftungseinrichtung in die Zuführung umgewälzt wird und, ohne wesentlich entlüftet zu sein, Vorsehen einer Vermehrung der in der Schokolade vorhandenen Belüftungsmenge, wenn sie auf das Produkt aufgetragen wird, und Ergänzen des Überschusses an flüssiger Schokolade durch aus einer Temperiervorrichtung (2) eingespeiste frische Schokolade.

5. Verfahren nach Anspruch 4, das die Ausbildung von Gasblasen in der druckbeaufschlagten flüssigen Schokolade (21) durch Gasinjektion, bevor die flüssige Schokolade den Auftragkopf (9') erreicht, umfasst, wobei die Einspritzrate von Gas in die flüssige Schokolade in Ansprechung auf ein Messgerät (22, 23) für die Dichte von flüssiger Schokolade in der Zuführung zu dem Auftragkopf (9') gesteuert wird.

6. Verfahren nach einem der Ansprüche 4 oder 5, wobei die Gaseinspritzung in die druckbeaufschlagte flüssige Schokolade mittels einer Belüftungseinrichtung (21) erfolgt, welche steuerbar ist, um zu berücksichtigen, dass frische Überzugsschokolade, die aus der Flüssigschokoladequelle (4) zugeführt wird, nicht belüftet ist, wohingegen die umgewälzte flüssige Schokolade (6, 1, 3, 2) im Allgemeinen zumindest noch teilweise belüftet ist.

7. Verfahren nach einem der Ansprüche 4, 5 oder 6, wobei an einer Position (23) in der druckbeaufschlagten Zuführung, die sich stromabwärts des Punktes (21) befindet, an dem die Belüftung vorgenommen wird, eine Dichtemessung durchgeführt wird.

8. Verfahren nach einem der Ansprüche 4 bis 7, wobei die Belüftungsvorrichtung in Ansprechung auf ein Messgerät für die Dichte der flüssigen Schokolade an einem Punkt (22) stromaufwärts der Stelle, an der die Belüftung vorgenommen wird, gesteuert wird.

9. Verfahren nach einem der Ansprüche 4 bis 8, wobei die flüssige Schokolade nach der Gaseinspritzung Scherkräften unterworfen wird, um die Gasblasengröße zu verringern.

10. Verfahren nach einem der Ansprüche 4 bis 9, wobei der Druck von flüssiger Schokolade nach der Belüftung im Wesentlichen im Bereich von 2 bis 10 Atmosphären über dem atmosphärischen Druck liegt.

11. Verfahren nach Anspruch 10, wobei der Druck der flüssigen Schokolade nach der Belüftung im Bereich von 3 bis 6 Atmosphären über dem atmosphärischen Druck liegt.

12. Verfahren nach einem der Ansprüche 4 bis 11, wobei der Druck in der druckbeaufschlagten Zuführung an flüssiger Schokolade durch eine Rückstaueinrichtung (50) in Form eines Durchflusswiderstands erzeugt wird, der in der nahen Umgebung des Auftragskopfes (9'), kurz vor dessen Einlass, positioniert ist.

13. Verfahren nach Anspruch 12, wobei der Durchflusswiderstand (50) einen verformbaren Kanal (56) und Mittel (57, 58, 59) zum Anwenden einer externen Verformungskraft auf den Kanal (56) in gesteuerter Weise aufweist, so dass die Querschnittsbohrung (65) des Kanals variiert wird.

## Revendications

1. Dispositif destiné à produire un enrobage de chocolat aéré sur un produit, le dispositif comportant une tête d'enduction (9') et un conduit d'alimentation de la tête d'enduction depuis un moyen d'aération (21), **caractérisé par** des moyens (34, 35 ; 56) de maintien de l'alimentation à une pression sensiblement supra-atmosphérique élevée jusque dans le voisinage de la tête d'enduction, un réservoir (4) destiné à recueillir l'excédent de chocolat délivré par la tête d'enduction, un moyen de recirculation (10) pour retourner l'excédent de chocolat directement du réservoir au moyen d'aération, sans passer par un désaérateur, afin d'assurer une amplification de l'aération présente dans le chocolat lorsqu'il est appliqué sur le produit, et une alimentation en chocolat frais (1) pour compléter l'excédent de chocolat par du chocolat frais en provenance de moyens pour tempérer celui-ci (2).

2. Dispositif selon la revendication 1 dans lequel l'alimentation en chocolat frais débouche dans le réservoir (4).

3. Dispositif selon la revendication 1 ou 2 dans lequel le moyen d'aération est disposé de manière à soumettre le chocolat liquide à des forces de cisaillement afin de réduire la taille des bulles de gaz.

4. Un procédé de production d'un enrobage de chocolat aéré sur des produits, consistant à alimenter du chocolat liquide vers une tête d'enduction (9'), à maintenir le chocolat sous une pression sensiblement supra-atmosphérique élevée jusque dans voisinage de la tête d'enduction (9'), à former, par injection de gaz dans un aérateur, des bulles gazeuses dans le chocolat pressurisé (21) avant que le chocolat n'atteigne
la tête d'enduction, l'excédent de chocolat liquide délivré par la tête d'enduction étant recueilli dans un réservoir (4) et recirculé dans ladite alimentation, en amont de l'aérateur, et sans être sensiblement désaéré, pour assurer une amplification de l'aération présente dans le chocolat quand celui-ci est appliqué au produit, et à compléter l'excédent de chocolat liquide par du chocolat frais alimenté à partir de moyens pour tempérer celui-ci (2).

5. Un procédé selon la revendication 4 consistant à former, par injection de gaz, des bulles gazeuses dans le chocolat liquide pressurisé (21) avant que le chocolat liquide n'atteigne la tête d'enduction (9'), la vitesse d'injection du gaz dans le chocolat liquide étant contrôlée en réponse à une mesure (22, 23) de la densité du chocolat liquide dans l'alimentation de la tête d'enduction (9').

6. Un procédé selon l'une quelconque des revendications 4 ou 5, dans lequel l'injection de gaz dans le chocolat liquide pressurisé s'effectue au moyen d'un aérateur (21) contrôlable de manière à prendre en compte le fait que le chocolat frais d'enrobage alimenté à partir de la source de chocolat liquide (4) n'est pas aéré tandis que le chocolat liquide recirculé (6, 1, 3, 2) est généralement encore au moins partiellement aéré.

7. Un procédé selon l'une quelconque des revendications 4, 5 ou 6 dans lequel une mesure de densité est effectuée à une position (23) dans l'alimentation pressurisée, située en aval du point (21) où s'opère l'aération.

8. Un procédé selon l'une quelconque des revendications 4 à 7, dans lequel le dispositif d'aération est contrôlé en réponse à une mesure de densité du chocolat liquide en un point (22) situé en amont du lieu où s'opère l'aération.

9. Un procédé selon l'une quelconque des revendications 4 à 8, dans lequel, après injection de gaz, le chocolat liquide est soumis à des forces de cisaillement afin de réduire la taille des bulles de gaz.

10. Un procédé selon l'une quelconque des revendications 4 à 9, dans lequel la pression du chocolat liquide après aération est sensiblement dans la plage de 2 à 10 atmosphères, au-dessus de la pression atmosphérique.

11. Un procédé selon la revendication 10, dans lequel la pression du chocolat liquide après aération est comprise entre 3 et 6 atmosphères au-dessus de la pression atmosphérique.

12. Un procédé selon l'une quelconque des revendications 4 à 11, dans lequel la pression dans l'alimentation pressurisée de chocolat liquide est créée par un moyen de contre-pression (50) sous la forme d'un limiteur de débit positionné à proximité de la tête d'enduction (9'), immédiatement avant l'entrée de celle-ci.

13. Un procédé selon la revendication 12, dans lequel le limiteur de débit (50) est constitué d'un conduit déformable (56) et de moyens (57, 58, 59) permettant d'appliquer une force de déformation externe au conduit (56) de manière contrôlée de façon à faire varier la section de passage (65) du conduit.
